# EUROPÄISCHE PATENTSCHRIFT

(11) **EP 3 953 084 B1**
(45) Veröffentlichungstag und Bekanntmachung des Hinweises auf die Patenterteilung: **25.11.2026**
(21) Anmeldenummer: 20728677.4
(22) Anmeldetag: 06.05.2020
(51) Int. Cl.: B22F 5/10, B33Y 80/00, B33Y 10/00

(54) **INNENWINKEL DURCH ALTERNIERENDE DRUCKSTRATEGIEN**
INTERIOR ANGLE FORMED BY ALTERNATING PRINTING STRATEGIES
ANGLE INTERNE OBTENU AU MOYEN DE STRATÉGIES D'IMPRESSION EN ALTERNANCE

(30) Priorität: 06.06.2019 DE 102019208245
(43) Veröffentlichungstag der Anmeldung: 16.02.2022
(73) Patentinhaber: Siemens Mobility GmbH, 80997 München (DE)
(72) Erfinder: SEEFRIED, Christoph, 90513 Zirndorf (DE)
(74) Vertreter: Siemens Patent Attorneys
(86) Internationale Anmeldenummer: PCT/EP2020/062498
(87) Internationale Veröffentlichungsnummer: WO 2020/244872

(56) Entgegenhaltungen:
- WO-A2-2014/209994
- CN-A- 106 313 573
- CN-A- 107 774 917
- CN-U- 207 983 984

## Beschreibung

Die Erfindung betrifft ein Verfahren zur Herstellung eines schichtweise aufgebauten Werkstücks sowie ein schichtweise aufgebautes Werkstück, welches wenigstens eine als Innenwinkel wirkende Kontur aufweist.

Zwei sich in einer Geraden schneidende Flächen schließen einen Winkel ein. Dieser ist spitzwinklig, beträgt er weniger als 90° oder stumpfwinklig, wenn er mehr als 90° beträgt. Grundsätzlich beträgt ein Innenwinkel weniger als 180°. Einen Innenwinkel eines Werkstücks bilden zwei den Innenwinkel einschließende Flächen des Werkstücks. Die Gerade, in welcher sich die den Innenwinkel begrenzenden Flächen des Werkstücks schneiden, ist dann eine Innenkante.

Derartige Innenwinkel werden üblicherweise durch spanende Verfahren hergestellt, insbesondere durch Materialabtragung; z.B. wird aus einem gegossenen, die Rohform bereits aufweisenden Rohling ein Innenwinkel ausgefräst. So kann eine scharfe Kante erreicht werden.

Wie bei vielen Herstellungsverfahren, so kommt es auch bei additiven Fertigungsverfahren, insbesondere Werkstoffextrusionsverfahren, zu abgerundeten Konturverläufen im Bereich von Innenwinkeln, die einer Nachbearbeitung bedürfen, soll ein scharfkantiger Innenwinkel erreicht werden. Dies ist jedoch mit teilweise erheblichem Mehraufwand verbunden.

Umgekehrt könnte ein Werkstück auch mit einem klassischen Eckfreistich unmittelbar mit einem additiven Fertigungsverfahren hergestellt werden. Klassische Eckfreistiche sind beispielsweise dann möglich, wenn die restliche Auflagefläche für Montagepartner ausreichend ist. Es gibt aber Anwendungsfälle, bei denen eine Abrundung nicht zulässig ist und ein klassischer Eckfreistich die Auflagefläche eines Montagepartners zu stark reduzieren würde.

CN 107 774 917 A offenbart ein gattungsgemäßes Verfahren zur Herstellung eines schichtweise aufgebauten Werkstücks, welches wenigstens eine als Innenwinkel wirkende Kontur aufweist.

Der Erfindung liegt die Aufgabe zugrunde, die Herstellung von Werkstücken mit Innenwinkeln zu vereinfachen.

Gelöst wird die Aufgabe durch die Gegenstände der unabhängigen Patentansprüche 1 und 5. Weiterbildungen und Ausgestaltungen der Erfindung finden sich in den Merkmalen der abhängigen Patentansprüche wieder.

Ein erfindungsgemäßes Verfahren zur Herstellung eines schichtweise aufgebauten Werkstücks mit wenigstens einer als, insbesondere scharfkantigem, Innenwinkel wirkenden Kontur umfasst die Fertigung von aufeinanderfolgenden Schichten des schichtweise aufgebauten Werkstücks mit alternierend vorgesehenen Freistichen in den Schichten auf unterschiedlichen Seiten einer Kurve, in welcher sich von der als Innenwinkel wirkenden Kontur aufgespannte Flächen schneiden, welche den Innenwinkel einschließen.

Das erfindungsgemäße Werkstück, welches insbesondere mittels des erfindungsgemäßen Verfahrens erhalten wird, weist wenigstens eine als, insbesondere scharfkantigen, Innenwinkel wirkende Kontur auf, wobei sich von der als Innenwinkel wirkenden Kontur aufgespannte Flächen in einer Kurve schneiden, welche Flächen den Innenwinkel einschließen, wobei das Werkstück fürderhin entlang der Kurve alternierend Freistiche in aufeinanderfolgenden Schichten des schichtweise aufgebauten Werkstücks auf unterschiedlichen Seiten der Kurve aufweist.

In einem Schnitt durch das Werkstück senkrecht zur Kurve bildet der Punkt der Kurve in der Schnittebenen den Eckpunkt des Innenwinkels. Der Innenwinkel verläuft entsprechend entlang der Kurve. Die Kurve kann weitergebildet als Gerade ausgebildet sein. Sie kann auch als Kante oder Innenkante bezeichnet werden. Als Kante gilt allgemein eine Linie, in der zwei Flächen zusammenstoßen.

In der Kurve schneiden sich die Flächen, die durch die Kontur des Werkstücks aufgespannt werden. Diese Flächen können weitergebildet als Ebenen ausgebildet sein.

Die Kontur des Werkstücks im Bereich des Innenwinkels ist insbesondere geeignet zur Anlage eines Montagepartners und entsprechend scharf und frei von einem klassischen Freistich, der ununterbrochen über eine Anlagefläche verläuft, ausgebildet. Die Flächen des Werkstücks zur Anlage des Montagepartners, also Oberflächen des Werkstücks, spannen die Flächen auf, die den Innenwinkel einschließen. Punkte der Oberfläche des Werkstücks liegen somit in den aufgespannten Flächen. Dabei zeichnen sich die aufgespannten Flächen, zumindest zwischen den Punkten der Oberfläche des Werkstücks, dadurch aus, dass sie durch stetige Funktionen beschreibbar sind. Zwischen den Punkten der Oberfläche des Werkstücks, die in den aufgespannten Flächen liegen, können Abschnitte der aufgespannten Flächen frei sein von Punkten des Werkstücks. Dies ist insbesondere im Bereich der Freistiche der Fall. Die aufgespannten Flächen begrenzen somit die Kontur des Werkstücks. Im Bereich der Freistiche bilden die Freistiche den Raum zwischen den aufgespannten Flächen und der tatsächlichen Oberfläche des Werkstücks.

Freistiche werden herkömmlicherweise durch Abtragungen in der Oberfläche des Werkstücks gebildet. Hier sind Freistiche durch Vertiefungen in den Schichten des schichtweise aufgebauten Werkstücks zu den von der als Innenwinkel wirkenden Kontur aufgespannten Flächen gebildet, so dass ein Freistich in einer Schicht einen freien, offenen Raum zwischen einer von der als Innenwinkel wirkenden Kontur aufgespannten Fläche und den jeweils benachbarten Schichten bildet. Der Raum wird also begrenzt von der Schicht und den benachbarten Schichten sowie von der aufgespannten Fläche.

Entlang der Kurve, in welcher sich die von der als, insbesondere scharfkantiger, Innenwinkel wirkenden Kontur aufgespannten Flächen schneiden und welche den Innenwinkel einschließen, sind nun auf unterschiedlichen Seiten der Kurve, also in den die Flächen aufspannenden Oberflächen des Werkstücks abwechselnd Freistiche in benachbarten Schichten angeordnet. Die Freistiche wechseln sich schachbrettmusterartig sowohl entlang der Kurve ab als auch senkrecht dazu ab und sind somit in aufeinanderfolgenden Schichten des schichtweise aufgebauten Werkstücks auf unterschiedlichen Seiten der Kurve alternierend angeordnet.

Ein Vorteil der Erfindung besteht in der unmittelbaren, nachbearbeitungsfreien Herstellung scharfkantiger Innenwinkel, in einer auf das Werkstück bezogenen Maßstabsebenen. Bei der Anwendung von 3D-Druckverfahren sind sie durch lokal alternierende Druckstrategien zu realisieren.

In einer Schicht wird eine Seite des Innenwinkels, in einer anderen Schicht wird die andere Seite produziert. So entsteht ein scharfkantiger Innenwinkel mit maximal möglicher Auflagefläche für Montagepartner. Darüber hinaus kann die Erfindung als Design-Objekt in einer CAD-Software oder in der Druckvorbereitungssoftware implementiert sein.

Der Innenwinkel wird während des Druckprozesses ohne spanende Nachbearbeitung erzeugt, wodurch Fertigungszeit und -kosten reduziert werden. Mittels der Erfindung sind Konturverläufe realisierbar, die vorher nicht möglich waren.

Gemäß einer Weiterbildung der Erfindung handelt es sich bei dem Verfahren zur Herstellung des Werkstücks um ein Verfahren aus der Gruppe der additiven Fertigungsverfahren handelt, insbesondere um ein Werkstoffextrusionsverfahren. Eines dieser Verfahren wird Schmelzschichtungsverfahren oder "Fused Deposition Modeling", kurz FDM-Verfahren, genannt. Weitere alternative, additive Fertigungsverfahren könnten etwa Schichtbauverfahren oder Pulverbettverfahren oder weitere Freiraumverfahren sein.

Eine weitere Weiterbildung der Erfindung ist darin zu sehen, dass die von der als Innenwinkel wirkenden Kontur aufgespannten Flächen, einen Winkel kleiner 180° einschließen. Entsprechend weist das Werkstück einen Innenwinkel von kleiner 180° auf. Der Innenwinkel wird dabei von den Flächen eingeschlossen, die von der als Innenwinkel wirkenden Kontur aufgespannt sind. Insbesondere beträgt der Innenwinkel weniger als 120°. Der Innenwinkel kann auch 90° oder weniger betragen.

Weitergebildet wird eine Schicht aus einer oder mehreren Werkstofflagen hergestellt. Eine Schicht des fertigen Werkstücks mit einem Freistich umfasst entsprechend eine oder mehrere Lagen Material. Material wird bei der Fertigung Schicht für Schicht oder Lage für Lage aufgetragen und so das dreidimensionale Werkstück erzeugt. Das Material wird dabei meist in flüssiger Form oder pulverförmig aufgetragen. Die aufeinanderfolgenden, übereinander aufgebrachten Schichten oder Lagen werden miteinander verbunden. Dabei entspricht eine Schicht des Werkstücks mit einem Freistich nicht zwingend auch einer einzigen Materialauftragung. Eine Schicht kann aus einer oder mehreren aufeinanderfolgend aufgetragenen und miteinander verbundenen Lagen Material bestehen. Um die Begriffe besser voneinander zu trennen, wird daher nachfolgend von Werkstofflagen gesprochen. Ein Freistich kann somit in mehreren aneinander liegenden und miteinander verbundenen Werkstofflagen vorgesehen sein, die eine einzige Schicht des Werkstücks bilden. Es können aber auch Freistiche alternierend in einzelnen Werkstofflagen vorgesehen sein.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt einen Querschnitt durch ein idealtypisches Werkstück mit Innenwinkel zur Anlage eines Montagepartners,
- Fig. 2: zeigt einen Querschnitt durch ein Werkstück mit abgerundeter, unscharfer, als Innenwinkel vorgesehenen Kontur,
- Fig. 3: zeigt einen Querschnitt durch ein Werkstück mit Innenwinkel und Eckfreistich,
- Fig. 4: zeigt schematisch ein erfindungsgemäß hergestelltes Werkstück in dreidimensionaler, perspektivischer Ansicht,
- Fig. 5: zeigt einen Querschnitt durch ein erfindungsgemäßes Werkstück.

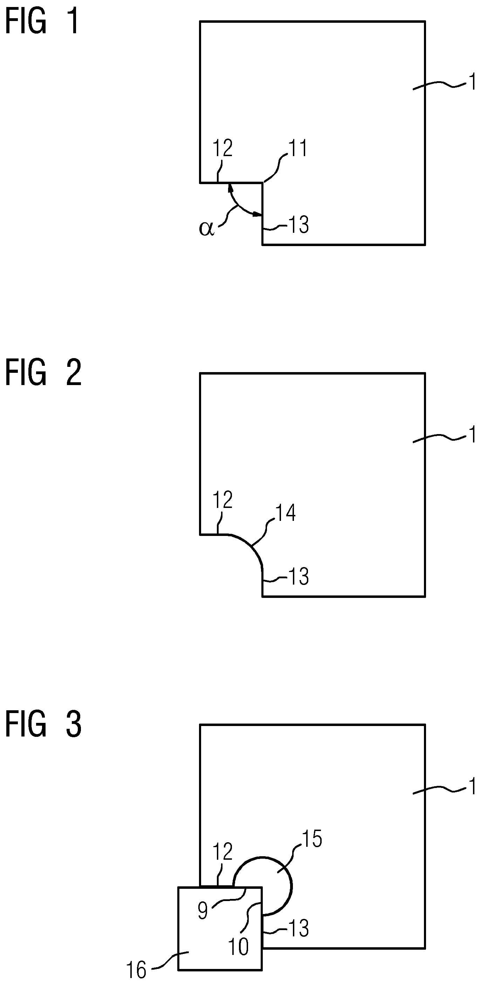

In Fig. 1 ist ein idealtypisches Werkstück 1 mit Innenwinkel α, geeignet zur Anlage eines Montagepartners, im Querschnitt dargestellt. Der Innenwinkel α wird durch zwei sich entlang einer Innenkante 11 schneidenden Begrenzungsflächen 12 und 13 des Werkstücks 1 eingeschlossen. Seine Winkelweite beträgt hier 90° und er ist scharf, d.h. die Begrenzungsflächen 12 und 13 schneiden sich entlang der Innenkante 11. Da es sich um eine Querschnittsdarstellung handelt ist die Innenkante 11 in einem Punkt, einer Innenecke abgebildet - der Winkelscheitel des Innenwinkels α. Die Begrenzungsflächen 12 und 13 sind entsprechend als Strecken gezeichnet - den Schenkeln des Innenwinkels α.

Die Begrenzungsflächen 12 und 13 sind hier ununterbrochene, ebene Oberflächen des Werkstücks 1. Sie dienen der Anlage eines, insbesondere rechtwinkligen, Montagepartners, welcher in dieser Abbildung nicht näher ausgeführt ist. Innenwinkel und anliegende Flächen des Montagepartners sind komplementär zueinander ausgebildet. Der Montagepartner kann beispielsweise quaderförmig ausgebildet sein. Der Sollkonturverlauf des Innenwinkels α ist entsprechend angepasst.

Bei der Additiven Fertigung (im speziellem beim FDM-Verfahren) ist es nicht möglich "scharfe" Innenwinkel zu produzieren. Bei additiver Fertigung einer solchen Geometrie kommt es zu einer Abrundung der als Innenwinkel dienenden Kontur, wie sie in Fig. 2 skizziert ist. Die ebenen Begrenzungsflächen 12 und 13 sind über einen teilrohrförmigen Abschnitt 14 miteinander verbunden, welcher in der zweidimensionalen Schnittdarstellung als Kreisbogen abgebildet ist.

Technisch ebenfalls realisierbar sind als Innenwinkel wirkende Konturen mit Eckfreistich. Fig. 3 zeigt ein derartiges Werkstück 1. An die Begrenzungsflächen 12 und 13 ist ein Montagepartner 16 angelegt. Dier berührt die Begrenzungsflächen 12 und 13 mit seinen Mantelflächen 9 und 10. Dieser ragt in einen Eckfreistich 15 im Werkstück hinein. Die Begrenzungsflächen 12 und 13 sind dadurch gegenüber dem Werkstück aus Fig. 1 deutlich reduziert.

Es gibt nun Anwendungsfälle, bei denen eine Abrundung (gemäß Fig. 2) nicht zulässig ist und ein klassischer Eckfreistich (gemäß Fig. 3) die Anlagefläche für einen Montagepartners zu stark reduzieren würde.

Ist eine abgerundete, als Innenwinkel dienende Kontur, wie in Fig. 2, für eine Nachbearbeitung zugänglich, könnte durch eine nachträgliche, beispielsweise spanende, Nachbearbeitung dieses Problem gelöst werden. Dies wäre jedoch mit erheblichem Mehraufwand und somit mit Mehrkosten verbunden.

Die Erfindung schlägt nun stattdessen ein Herstellungsverfahren für ein schichtweise aufgebautes Werkstücks mit wenigstens einer als Innenwinkel wirkenden Kontur vor, gemäß welchem entlang einer Kurve, in welcher sich von der als Innenwinkel wirkenden Kontur aufgespannte Flächen schneiden, welche den Innenwinkel einschließen, alternierend Freistiche in aufeinanderfolgenden Schichten des schichtweise aufgebauten Werkstücks auf unterschiedlichen Seiten der Kurve vorgesehen werden.

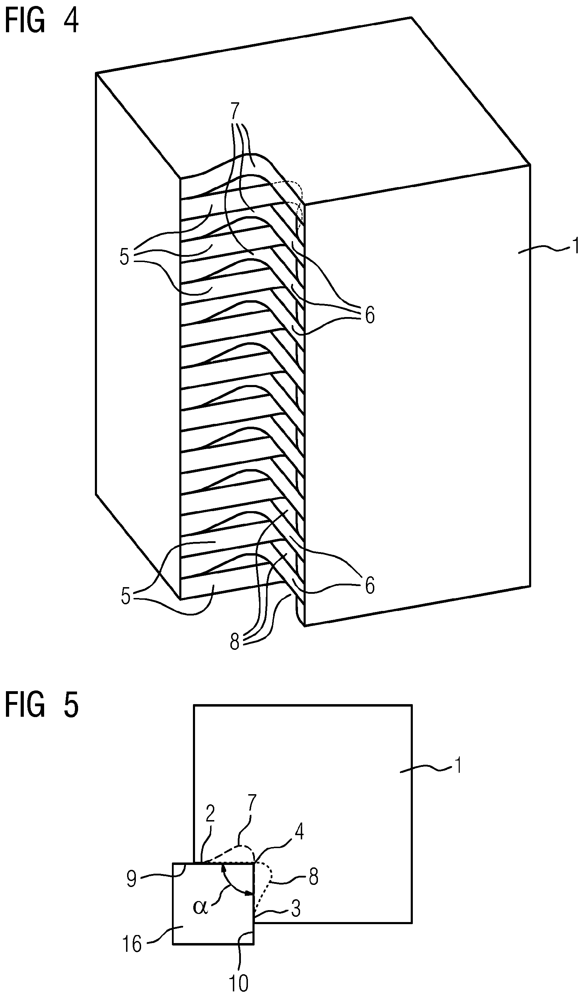

Ein derartig hergestelltes Werkstück 1 ist in Fig. 4 perspektivisch dargestellt. Fig. 5 zeigt analog zu den Fig. 1 bis Fig. 3 wiederum einen Querschnitt durch das erfindungsgemäße Werkstück der Fig. 4, mit nicht sichtbaren Kanten [gestrichelt und gepunktet gezeichnet] sowie einem komplementär zu der als Innenwinkel wirkenden Kontur und von dieser aufgespannten Flächen ausgebildeten Montagepartner 16, mit seinen Mantelflächen 9 und 10. Beide Figuren werden nachfolgend zusammen beschrieben.

Das Werkstück 1 weist eine als Innenwinkel α wirkende Kontur auf. Der Innenwinkel α wird dabei eingeschlossen von zwei Flächen 2 und 3, die von der als Innenwinkel α wirkenden Kontur des Werkstücks 1 aufgespannt werden. Die Flächen 2 und 3 schneiden sich in einer Kurve 4, insbesondere einer Geraden.

Die Oberflächen des Werkstücks im Bereich des Innenwinkels α weisen beidseitig Freistiche 7 und 8 auf, die alternierend in den gegenüberstehenden Oberflächen angeordnet sind.

Die zur Oberfläche des Werkstücks gehörenden und die als Innenwinkel α wirkende Kontur begrenzenden Begrenzungsflächen 5 und 6 der zwischen den Freistichen 7 und 8 verbliebenen Stege des Werkstücks 1 dienen als Anlageflächen des Werkstücks 1 für den komplementär zu Innenwinkel wirkenden Kontur ausgebildeten Montagepartner 16.

Die Breiten der Stege und damit der Begrenzungsflächen 5 und 6 und der Freistiche 7 und 8 sind hier gleich und identisch mit der Breite einer Schicht des schichtweise aufgebauten Werkstücks. Die Bezugszeichen 5, 6, 7 und 8 kennzeichnen somit hiermit gleichzeitig Schichten des schichtweise aufgebauten Werkstücks.

Die Begrenzungsflächen 5 berühren die jeweils benachbarten Begrenzungsflächen 6 einseitig in einem Punkt oder beidseitig in jeweils einem Punkt auf einer Seite. Diese Berührungspunkte liegen in der Kurve 4. Die Freistiche 7 und 8 sind somit entlang der Kurve 4 alternierend in benachbarten, aufeinanderfolgenden Schichten des schichtweise aufgebauten Werkstücks auf unterschiedlichen Seiten der Kurve 4 vorgesehen.

Sämtliche Punkte der Begrenzungsfläche 5 liegen in der von ihr aufgespannten, gedachten Fläche 2. Gleichermaßen liegen sämtliche Punkte der Begrenzungsfläche 6 in der von ihr aufgespannten, gedachten Fläche 3. Aufgrund der besonderen Ausführung des hier dargestellten Werkstücks 1, mit der als Gerade ausgeführten Kurve 4, sieht das Werkstück 1 in der Draufsicht identisch aus wie das Werkstück aus Fig. 1. In der Projektion in eine Ebene senkrecht zu der als Geraden ausgeführten Kurve 4 wird ein scharfer Innenwinkel erhalten.

Die Kontur des Werkstücks 1 wirkt somit als scharfer Innenwinkel ohne Abrundung und ohne klassischen Eckfreistich.

## Patentansprüche

1. Verfahren zur Herstellung eines schichtweise aufgebauten Werkstücks (1) mit wenigstens einer als Innenwinkel (α) wirkenden Kontur,
**dadurch gekennzeichnet, dass**
entlang einer Kurve (4), in welcher sich von der als Innenwinkel (α) wirkenden Kontur aufgespannte Flächen schneiden, welche den Innenwinkel einschließen, alternierend Freistiche (7, 8) in aufeinanderfolgenden Schichten des schichtweise aufgebauten Werkstücks auf unterschiedlichen Seiten der Kurve vorgesehen werden.

2. Verfahren nach Anspruch 1,
**dadurch gekennzeichnet, dass**
es ein Werkstoffextrusionsverfahren ist.

3. Verfahren nach einem der Ansprüche 1 oder 2,
**dadurch gekennzeichnet, dass**
die von der als Innenwinkel (α) wirkenden Kontur aufgespannten Flächen einen Winkel kleiner 180° einschließen.

4. Verfahren nach einem der Ansprüche 1 bis 3,
**dadurch gekennzeichnet, dass**
eine Schicht aus einer oder mehreren aufeinanderfolgend aufgetragenen und miteinander verbundenen Werkstofflagen hergestellt wird.

5. Werkstück (1) mit wenigstens einer als Innenwinkel (α) wirkenden Kontur, wobei sich von der als Innenwinkel (α) wirkenden Kontur aufgespannte Flächen in einer Kurve schneiden, welche den Innenwinkel (α) einschließen,
**dadurch gekennzeichnet, dass**
entlang der Kurve alternierend Freistiche (7, 8) in aufeinanderfolgenden Schichten des schichtweise aufgebauten Werkstücks auf unterschiedlichen Seiten der Kurve vorgesehen sind.

6. Werkstück nach Anspruch 5, erhalten durch ein Verfahren nach Anspruch 2.

7. Werkstück nach einem der Ansprüche 5 oder 6,
**dadurch gekennzeichnet, dass**
die von der als Innenwinkel (α) wirkenden Kontur aufgespannten Flächen (2, 3) einen Winkel kleiner 180° einschließen.

8. Werkstück nach einem der Ansprüche 5 bis 7,
**dadurch gekennzeichnet, dass**
eine Schicht eine Werkstofflage oder mehrere aufeinanderfolgend aufgetragene und miteinander verbundene Werkstofflagen umfasst.

## Claims

1. Method for producing a workpiece (1) constructed in laminations with at least one contour that acts as an internal angle (α),
**characterised in that**,
along a curve (4), in which areas spanned by the contour that acts as an internal angle (α) intersect, which areas include the internal angle, undercuts (7, 8) are provided on an alternating basis in successive laminations of the workpiece constructed in laminations, on different sides of the curve.

2. Method according to claim 1,
**characterised in that**
it is a material extrusion method.

3. Method according to one of claims 1 or 2,
**characterised in that**
the areas spanned by the contour that acts as an internal angle (α) include an angle less than 180°.

4. Method according to one of claims 1 to 3,
**characterised in that**
a lamination consisting of one or multiple successively applied and interconnected material layers is produced.

5. Workpiece (1) with at least one contour that acts as an internal angle (α), wherein areas spanned by the contour that acts as an internal angle (α) intersect in a curve, which areas include the internal angle (α),
**characterised in that**
undercuts (7, 8) are provided, alternating along the curve, in successive laminations of the workpiece constructed in laminations, on different sides of the curve.

6. Workpiece according to claim 5, obtained by a method according to claim 2.

7. Workpiece according to one of claims 5 or 6,
**characterised in that**
the areas (2, 3) spanned by the contour that acts as an internal angle (α) include an angle less than 180°.

8. Workpiece according to one of claims 5 to 7,
**characterised in that**
a lamination comprises a material layer or multiple successively applied and interconnected material layers.

## Revendications

1. Procédé de fabrication d'une pièce (1) constituée couche par couche et ayant au moins un contour agissant comme angle (α) intérieur,
**caractérisé en ce que**
le long d'une courbe (4), dans laquelle se coupent des surfaces s'étendant du contour agissant comme angle (α) intérieur, lesquelles forment l'angle intérieur, sont prévues sur des faces différentes de la courbe, des coupes de dégagement (7, 8) alternées dans des couches successives de la pièce constituée couche par couche.

2. Procédé suivant la revendication 1,
**caractérisé en ce que**
c'est un procédé d'extrusion de matériau.

3. Procédé suivant l'une des revendications 1 ou 2,
**caractérisé en ce que**
les surfaces s'étendant du contour agissant comme angle (α) intérieur font un angle plus petit que 180°.

4. Procédé suivant l'une des revendications 1 à 3,
**caractérisé en ce que** l'
on produit une couche composée d'une ou de plusieurs strates de matériau déposées successivement et reliées entre elles.

5. Pièce (1) comprenant au moins un contour agissant comme angle (α) intérieur, dans laquelle des surfaces s'étendant du contour agissant comme angle (α) intérieur, se coupent en une courbe, lesquelles forment l'angle (α) intérieur,
**caractérisée en ce qu'**
il est prévu sur des faces différentes de la courbe, des coupes de dégagement (7, 8) alternant le long de la coupe dans des couches successives de la pièce constituée couche par couche.

6. Pièce suivant la revendication 5, obtenue par un procédé suivant la revendication 2.

7. Pièce suivant l'une des revendications 5 ou 6,
**caractérisée en ce que**
les surfaces (2, 3) s'étendant du contour agissant comme angle (α) intérieur font un angle plus petit que 180°.

8. Pièce suivant l'une des revendications 5 à 7,
**caractérisée en ce qu'**
une couche comprend une strate de matériau ou plusieurs strates de matériau déposées de manière successive et reliées entre elles.
